# EUROPEAN PATENT SPECIFICATION

(11) **EP 2 145 916 B1**
(45) Date of publication and mention of the grant of the patent: **19.06.2013**
(21) Application number: 08012948.9
(22) Date of filing: 17.07.2008
(51) Int. Cl.: C08J 7/04, C08J 7/16, C09D 127/12

(54) **Substrate coating comprising a complex of an ionic fluoropolymer and surface charged nanoparticles**
Substratbeschichtung mit einem Komplex aus einem ionischen Fluorpolymer und oberflächengeladenen Nanopartikeln
Revêtement de substrat comportant un complexe de fluoropolymère ionique et nanoparticules chargées à la surface

(43) Date of publication of application: 20.01.2010
(73) Proprietor: W.L.GORE & ASSOCIATES GMBH, 85640 Putzbrunn (DE)
(72) Inventor: Bürger, Wolfgang, 84424 Burgrain (DE); Steffl, Rudolf, 87466 Oy-Mittelberg (DE)
(74) Representative: Kador & Partner

(56) References cited:
- US-A1- 2006 266 642
- US-A1- 2008 020 208

## Description

The invention relates to an article comprising a substrate and a coating thereon comprising an ionic fluoropolymer and surface charged nanoparticles, to a process for the production of such a coating, and to the use thereof for improving a variety of properties of the substrate.

It is well known to coat substrates in order to impart desirable properties such as water-tightness, resistance against chemicals, fire retardance and the like to the coated substrate. However, most concepts and coatings so far have focused on the improvement of a specific property, but do not allow to impart a variety of desirable properties to the substrate and to fine-tune and balance them.

For example, applying a polyester and/or polyurethane coating onto an expanded polytetrafluoroethylene (ePTFE) substrate improves the contamination protection against chemicals such as contained in sun lotions, makeup and the like (US 4,194,041 and US 6,074,738). These coatings, however, do not allow an optimization of other important properties of the substrate such as fire retardance, hydrophilicity, air permeability or the like. Furthermore, coatings based on non-ionic perfluoropolyethers have been used to modify the oleophobicity of microporous polymer substrates, as disclosed in EP 615 779.

It is a further requirement for a coating agent that it must have a good adherence to the substrate in order to functionalise it permanently, and that it should not or only to a small degree adversely affect the desired inherent properties of the polymer.

For example, in the case of a microporous polytetrafluoroethylene (PTFE) membrane used for liquid filtration, a coating must not be easily washed off and it should not impair the fluid flow through the pores.

Furthermore, based on the inertness and low surface energy of many substrates, especially fluorinated polymer substrates, it is known that it is very difficult to coat the surfaces of those substrates, e.g. microporous ePTFE, with ionic or charged species. The poor adhesion of those substrates to ionic or charged species leads to failure in many industrial applications. This means that without any chemical surface treatment like etching, radiation, laser treatment, plasma activation and/or supercritical CO₂ pretreatment, there is usually no way to coat directly and permanently polyions like intrinsically conductive polymers, metal ions, organic ions, charged particulates, salts and others onto these surfaces. However, especially those compounds could be expected to impart special properties if coated to a substrate.

Still further, these methods devoted directly to the surface modification like etching, plasma or corona treatment, irradiation etc., which have been developed to improve their adhesion ability, are destructive for the substrate and go along with surface defluorination and weakening of the mechanical strength of the fluoropolymer substrate. If the substrate is thin, the mechanical strength of the substrate can even decrease to such an extent that the substrate is not sustainable under surface modification conditions.

It is an object of the invention to provide a coating for non-conductive substrates which allows to impart a wide variety of properties to the substrate and allows to tailor those properties, especially allows the production of substrates with good breathability, flame retardancy and antistatic properties. Simultaneously, the coating should have good adhesion to the substrate, should be easily preparable and applicable, and should be evenly and homogeneously distributable on the substrate.

It is a further objective to provide coatings comprising ionic or charged species on substrates normally difficult to coat with these substances.

It has now surprisingly been found that these objects can be achieved by forming a coating on a non-conductive substrate comprising two components - an ionic fluoropolymer, i.e. a fluorinated polymer which comprises ionic groups, and a counter ionic agent bearing ionic charges opposite to that of the ionic groups of the fluoropolyether which comprises surface charged nanoparticles - in the form of a complex.

The present invention therefore provides an article comprising a non-conductive substrate and a coating thereon comprising a complex of an ionic fluoropolymer and a counter-ionic agent which comprises surface charged nanoparticles.

The article according to the invention allows the provision of improved properties. It has surprisingly been found that a huge variety of different properties of the substrate can be improved and tailored applying the present invention. Depending on the nature of, in particular, the counter-ionic agent including the surface charged nanoparticles, for example heat and flame protection, antistatic properties, hydrophilicity, hydrophobicity and/or antibacterial properties can be imparted to the substrate and fine-tuned.

Furthermore, the combination of counter-ionic agent and ionic fluoropolymer, and the complex formation between those components, leads to insoluble, durable coatings, especially as a thin layer at the surface of fluoropolymers. This, in turn, means that the invention allows the durable bonding of ionic species to fluoropolymer surfaces.

As no pre-treatment of the substrate is necessary before coating, the invention allows for the functionalization of the substrate in a non-degrading way. Very thin membranes may thus be provided with additional functionalities without a loss of mechanical properties.

Still further, the invention allows the functionalisation of a porous membrane in such a way that gas and liquid transport through it can be maintained.

The article, moreover, can be easily fine-tuned as regards air flow properties when using microporous substrates and can be tailored to provide an unique balance of oil rating and at the same time reduced water absorption.

In case of PTFE and ePTFE substrates, it is particularly advantageous that the coatings show excellent adhesion and film forming properties.

Furthermore, for coatings of the inner pore surface of (micro-)porous substrates it is advantageous that the coatings of the invention are formed smoothly and evenly so that pores are not blocked. This advantage is especially important compared to prior art concepts which have used small particles in order to modify properties of the substrate. The advantage of the invention is represented in high flow-through rates for air and liquids for porous materials. For monolithic coatings, i.e. layers on the outer surface of a substrate, the absence of particulates allows the formation of ultra-thin coatings.

The articles of the invention moreover may be provided with enhanced moisture vapor transmission rates (MVTR) and, at the same time, water impermeability, excellent resistance against chemicals, excellent UV-degradation resistance and mechanical stability. The articles may furthermore have an improved balance of permeability and MVTR values and a translucent tinct.

Articles according to the invention may be used in garments such as in garments for protection, comfort and functionality, in textile structures, in laminates, in filter elements such as for filtration or microfiltration of liquids and/or gases, in venting elements such as for venting of vessels and containers, in sensors, in diagnostic devices, in protective enclosures, and in separation elements.

The substrate may be any non-conducting substrate on which a coating can be applied. Non-conducting means that the substrate has a specific surface resistance higher than 10¹⁰ Ohm/square at 23°C and 50 % relative humidity.

The substrate may comprise an organic or an inorganic material such as synthetic and/or natural polymers, and composites of synthetic and/or natural polymers.

The substrate can be a membrane, a textile or a laminate. The substrate may be woven, non-woven, felt or knit. The substrate may be also fibres such as monofilaments, multifilaments, or yarns, including microdenier fibers and yarns.

The substrate can be a dielectric substrate.

In one embodiment the substrate is a polymeric substrate. In this embodiment, the polymeric substrate may be any kind of polymer such as synthetic, natural polymers and/or composites of synthetic and/or natural polymers.

Polymeric substrates are known to have a low surface energy, in contrast e.g. to metals or metal oxides. The polymeric substrate of the article of the invention in one embodiment has a surface energy of 100 mN/m or less, and in a further embodiment has a surface energy of 40 mN/m or less.

The substrate on which the coating is present in one embodiment has a thickness of 1 to 1 000 micrometer, in a further embodiment has a thickness of 3 to 500 micrometer, and in still a further embodiment has a thickness of 5 to 100 micrometer.

Further layers of the same or a different material may be laminated to the coated substrate.

In one embodiment, the substrate is a fluoropolymer, i.e. a polymer which contains fluorine atoms, and in a further embodiment, the substrate is a fluoropolyolefin.

The substrate may include fillers.

The fluoropolymer may be partially fluorinated, or fully fluorinated, i.e. perfluorinated.

In one embodiment, the substrate comprises polytetrafluoroethylene (PTFE), a modified PTFE, a fluorothermoplastic or a fluoroelastomer or any combination of these materials. The term "modified PTFE" as used herein is intended to denote a type of tetrafluoroethylene copolymer in which in addition to tetrafluoroethylene monomer units further perfluorinated, fluorinated or non-fluorinated co-monomer units are present.

In a second embodiment, the substrate consists of polytetrafluoroethylene (PTFE), a modified PTFE, a fluorothermoplastic or a fluoroelastomer or any combination of these materials.

In a further embodiment, the substrate comprises polytetrafluoroethylene (PTFE), and in still a further embodiment, the substrate consists of PTFE.

The substrate furthermore may be a porous substrate, for example porous PTFE.

The term "porous" as used herein refers to a material which has voids throughout the internal structure which form an interconnected continuous air path from one surface to the other.

The substrate may be a microporous substrate. This means that the voids of the substrate are very small and are usually referred to as "microscopic".

A suitable pore size of the voids in the microporous substrate is in the range of 0.01 to 15 micrometer as determined in the mean flow pore size measurement.

In one embodiment, the substrate comprises, or consists, of expanded PTFE (ePTFE, EPTFE).

PTFE may be expanded (i.e., drawn) in one or more directions to render the fluoropolymer porous. The porous fluoropolymer can be in the form of a tape, tube, fiber, sheet or membrane. The microstructure of the porous fluoropolymer can include nodes and fibrils, only fibrils, only fibril strands or bundles, or stretched nodes interconnected by fibrils.

Suitable fluoropolymer membranes include uni- or biaxially stretched polytetrafluoroethylene membranes.

A suitable expanded polytetrafluoroethylene (ePTFE) material is, e.g., the nonwoven ePTFE films disclosed by Bowman in U.S. 4,598,011, by Branca in WO 96/07529, by Bacino in U.S. Pat. No. 5,476,589, by Gore in US 4,194,041 and by Gore in U.S. 3,953,566, the contents of which are incorporated herein by reference. The ePTFE films described therein are thin, strong, chemically inert and intrinsically can have a high flow-through rate for air or liquids.

Suitable fluoropolymers for making ePTFE films include PTFE and copolymers of tetrafluoroethylene like FEP, PFA, THV etc.

The combination of mean flow pore size and thickness determines flow rates through the membranes. For microfiltration applications, acceptable flow is required with good particle retention performance. A narrow small ePTFE pore size comes with high water entry pressures. A more open ePTFE pore size would decrease the resistance of an ePTFE membrane against water entry. For these practical reasons, a mean flow pore size of ePTFE below 0.3 micrometer is considered to be good.

The term "ionic fluoropolymer" is intended to denote an organic polymer having ionic groups, i.e. groups bearing an electric charge, which may be anionic or cationic groups, such as -SO₃⁻, -COO⁻, -PO₄²⁻, or -NH₃⁺. Furthermore, in the ionic fluoropolymer, fluorine atoms are present which are covalently bonded to carbon atoms in the polymer main or side chains (branches).

Precursors of ionic fluoropolymers are such compounds which can be transferred into ionic fluoropolymers by simple chemical reactions. For example, the precursor for an ionic fluoropolymer containing -SO₃⁻ groups as ionic groups may be the same compound with non-ionic -SO₃H groups, which may then be converted into the corresponding anionic -SO₃⁻ groups by reaction of the precursor with the counter-ionic agent or its precursor.

The term "organic polymer" includes homopolymers, copolymers, such as for example, block, graft, random and alternating copolymers as well as terpolymers, further including their derivatives, combinations and blends thereof. Furthermore, unless specifically limited, the term "polymer" shall include all geometrical configurations of the molecule including linear, block, graft, random, alternating, branched structures, and combination thereof as regards both embodiments.

In one embodiment, the ionic fluoropolymer has a high fluorine content, e.g. > 50 atom% with respect to the non-carbon atoms, in order to improve the compatibility to the substrate, especially to fluorinated substrates such as PTFE.

In one embodiment, the fluorine/hydrogen ratio, in the following F/H ratio, of the ionic fluoropolymer is above 1, in a further embodiment it is above 2, and in still a further embodiment it is above 3, as the compatibility with substrates, in particular fluorinated polymers, is further improved and the solubility in water is kept on a low level. Additionally, the durability of the coating is enhanced.

The F/H ratio determines the degree of swelling at moderate or high relative humidity. The higher the F/H ratio the lower the degree of swelling under humid conditions.

In one embodiment, the ionic fluoropolymers are perfluorinated, in particular in the case of using them with fluorinated substrates such as PTFE or ePTFE substrates.

The equivalent weight of an ionic fluoropolymer is defined to be the molecular weight of the ionic fluoropolymer divided by the number of ionic groups present in the ionic fluoropolymer.

The equivalent weight of the ionic fluoropolymer in one embodiment ranges from 400 to 15 000 g/mol, in a further embodiment it ranges from 500 to 10 000 g/mol, and in still a further embodiment it ranges from 700 to 8 000 g/mol.

If the equivalent weight is too low, the solubility in water will be too high. If the equivalent weight is too high the processing properties will be deteriorated.

In one embodiment, the ionic fluoropolymer is not water-soluble.

The ionic groups of the ionic fluoropolymer may be anionic groups or cationic groups.

In one embodiment, the ionic groups are anionic groups, and in a further embodiment, the groups are selected from carboxylic, phosphoric, sulphonic groups and mixtures thereof.

In one embodiment of the invention the ionic fluoropolymer is either a fluoroionomer or an ionic fluoropolyether.

The term "fluoroionomer" is intended to denote a copolymer of partially or perfluorinated alpha olefins such as H₂C=CHF (vinyl fluoride), H₂C=CF₂ VDF (vinylidene fluoride), HFC=CHF, F₂C=CF₂ (tetrafluoroethylene), F₂C=CFCF_{3,} CIFC=CF₂ chlorotrifluoroethylene, with partially or perfluorinated vinyl ethers. The copolymer furthermore contains ionic groups. The fluoroionomer may also include non-fluorinated comonomers such as acetylene.

The fluoroionomer may comprise side chains which may be linked to the polymer by an ether group. The side chain length can vary from 3 carbon atoms to 8 carbon atoms including ether links. Then, the ionic groups may be bonded to the side chains.

Commercial ionomers are available from DuPont (DuPont™ Nafion^{®}), Asahi Glass Co.Ltd. (Flemion^{®}), 3M-Dyneon (US patent publication no. 2004/0121210 A1), Asahi Kasei (Aciplex^{®}), Dow Chemical (Dow 808 EW ionomer), Solvay Solexis (Hyflon^{®}Ion), and Shanghai GORE 3F (US 7,094,851).

The term "ionic fluoropolyether" is intended to denote a polymer made from partially or perfluorinated olefinic monomer units linked by O atoms and units containing ionic groups, i.e. groups bearing an electric charge. In the ionic fluoropolyether molecules, one or more ionic groups of the same or a different nature may be present.

Ionic fluoropolyethers typically are thermally stable, substantially insoluble in water and most common solvents, and cannot be leached out after a coating application.

For example, the fluoropolyether olefinic monomer units may comprise -O-(CF₂-CF₂)-, and/or -O-(CFH-CF₂)-, and/or -O-(CH₂-CF₂)-, and/or -O-(CH₂-CHF)-, and/or -O-(CF(CH₃)-CF₂)-, and/or -O-(C(CH₃)₂-CF₂)-, and/or -O-(CH₂-CH(CH₃))-, and/or -O-(CF(CF₃)-CF₂)-, and/or -O-(C(CF₃)₂-CF₂)-, and/or -O-(CF₂-CH(CF₃)) -.

The ionic groups may be anionic groups, such as -SO₃⁻, -COO⁻, -OPO₃²⁻, and/or combinations of anionic and cationic groups, such as -SO₃⁻, -COO⁻, -OPO₃²⁻, with -NH₃⁺,-NR₁H₂⁺ or -NR₂H⁺.

In one embodiment, the ionic groups are anionic groups, and in a further embodiment the groups are selected from carboxylic, phosphoric, sulphonic groups and mixtures thereof.

Precursors of ionic fluoropolyethers are such compounds which can be transferred into fluoropolyethers having ionic groups by simple chemical reactions. For example, the precursor for an ionic fluoropolyether containing -COO⁻ groups as ionic groups may be the same compound with non-ionic -COOH groups, which may then be converted into the corresponding anionic -COO⁻ groups by reaction of the precursor with the counter-ionic agent or its precursor.

In the ionic fluoropolyether, fluorine atoms are present which are covalently bonded to carbon atoms in the polymer main or side chains (branches). The term "polymer" includes copolymers, such as for example, block, graft, random and alternating copolymers as well as terpolymers, further including their derivatives, combinations and blends thereof. Furthermore, unless specifically limited, the term "polymer" shall include all geometrical configurations of the molecule including linear, block, graft, random, alternating, branched structures, and combination thereof.

Ionic perfluorinated polyethers usually have olefinic monomer units selected from any one of or combination of the following: -CF₂-O-; -(CF₂CF₂)-O-; -(CF(CF₃))-O-; -(CF₂CF₂CF₂)-O-; -(CF₂CF(CF₃))-O-; and - (CF(CF₃)CF₂)-O-. Some newer types of perfluorinated polyethers may also contain other repeating units (e. g. (C(CF₃)₂)-O- ) or such with more than three carbon atoms: e. g. -(C₄F₈)-O-; or -(C₆F₁₂)-O-.

In one embodiment, the ionic fluoropolyether is selected from the group of ionic perfluoropolyalkylethers, i.e. perfluoropolyalkylethers having one or more ionic groups in the molecule. Perfluoropolyalkylether are usually abbreviated as "PFPE". Other synonymous terms frequently used include, "PFPE oil", "PFPE fluid" and "PFPAE".

In the art, PFPEs are known which have only neutral, non-ionic groups, especially non-ionic end groups.

A general description of such perfluorinated polyethers is found in the book "Modern Fluoropolymers", edited by John Scheirs, Wiley Series in Polymer Science, John Wiley & Sons (Chichester, New York, Wienheim, Brisbane, Singapore, Toronto), 1997, Chapter 24: Perfluoropolyethers (Synthesis, Characterization and Applications), which is incorporated herein by reference.

However, ionic fluoropolyethers, including ionic PFPEs as used in the present invention, differ from such neutral PFPE in that they comprise ionic groups.

The ionic fluoropolyether molecule usually comprises two end-groups at opposite ends of the backbone of the ionic fluoropolyether structure.

Typically, the ionic groups present in the ionic fluoropolyether molecule constitute, or are attached to, those end groups.

The ionic fluoropolyether may thus have been obtained by modifiying non-ionic fluoropolyether by end group reactions. Such compounds are commercially available, for example, the compounds sold under the trade name Fluorolink^{®} (Solvay Solexis).

Embodiments of ionic fluoropolyethers, or precursors thereof, are:
(a) a perfluoropolyether (PFPE), said PFPE comprising end-groups selected from the following:

   -(O)ₙ-(CR₁R₂)ₘ-X

   wherein:
   R₁ = H, F, Cl, Br or I;
   R₂ = H, F, Cl, Br or I;
   X = COOH, SO₂OH or OPO(OH)₂,
   n = 0 or 1; and
   m=0-10.
   However, there may also be groups next to the end groups such as those containing

   -CFH-,

   -(CH₂)ₙ- with n=1 to 10,
   -(OCH₂)ₙ- with n=1 to 10 or
   -(OCH₂CH₂)ₙ-with n=1 to 10.

If the ionic fluoropolyether comprises non-ionic end-groups, typically these are groups such as, -OCF₃, -OC₂F₅, and -OC₃F₇.

However, the non-ionic end-groups may also be selected from the following:

-(O)ₙ-(CR₁R₂)ₘ-CR₃R₄R₅

wherein:
R₁ = H, F, Cl, Br or I;
R₂ = H, F, Cl, Br or I;
R₃ = H, F, Cl, Br or I;
R₄ = H, F, Cl, Br or I;
R₅ = H, F, Cl, Br, I, alkyl or aryl;
n = 0 or 1; and
m = 0 - 10.

Furthermore, there may also be non-perfluorinated end groups such as those containing H, Cl, Br or I radicals.

Examples of non-perfluorinated end groups comprise structures such as:

-CF₂R₆

R₆ = H, Cl , Br, or I; or

-CFR₇-CF₃

R₇ = H, Cl, Br or I.

The end-groups according to the formula of -(O)ₙ-(CR₁R₂)ₘ-CR₃R₄R₅ may also be selected from any combination of the following:
- OCF₃; -OC₂F₅; -OC₃F₇; -OC₄F₉; -OC₅F₁₁; -OC₆F₁₃; -OC₇F₁₅; -OC₈F₁₇; -OC₉F₁₉; -OC₁₀F₂₁;
- OCF₂H; -OC₂F₄H; -OC₃F₆H; -OC₄F₈H; -OC₅F₁₀H; -OC₆F₁₂H; -OC₇F₁₄H; - OC₈F₁₆H; -OC₉F₁₈H; -OC₁₀F₂₀H;
- OCF₂Cl; -OC₂F₄Cl; -OC₃F₆Cl; -OC₄F₈Cl; -OC₅F₁₀Cl; -OC₆F₁₂Cl; -OC₇F₁₄Cl; -OC₈F₁₆Cl; -OC₉F₁₈Cl; -OC₁₀F₂₀Cl;
- OCF₂Br; -OC₂F₄Br; -OC₃F₆Br; -OC₄F₈Br; -OC₅F₁₀Br; -OC₆F₁₂Br; - OC₇F₁₄Br; -OC₈F₁₆Br; -OC₉F₁₈Br; -OC₁₀F₂₀Br;
- OCF₂I; -OC₂F₄I; -OC₃F₆I; -OC₄F₈I; -OC₅F₁₀I; -OC₆F₁₂I; -OC₇F₁₄I; -OC₈F₁₆I; -OC₉F₁₈I; -OC₁₀F₂₀I;
- OCF₁H₂; -OC₂F₃H₂; -OC₃F₅H₂; -OC₄F₇H₂; -OC₅F₉H₂; -OC₆F₁₁H₂; - OC₇F₁₃H₂; -OC₈F₁₅H₂; -OC₉F₁₇H₂; -OC₁₀F₁₉H₂;
- OCFCl₂; -OC₂F₃Cl₂; -OC₃F₅Cl₂; -OC₄F₇Cl₂; -OC₅F₉Cl₂; -OC₆F₁₁Cl₂; - OC₇F₁₃Cl₂; -OC₈F₁₅Cl₂; -OC₉F₁₇Cl₂; -OC₁₀F₁₉Cl₂;
- OCF₁Br₂; -OC₂F₃Br₂; -OC₃F₅Br₂; -OC₄F₇Br₂; -OC₅F₉Br₂; -OC₆F₁₁Br₂; - OC₇F₁₃Br₂; -OC₈F₁₅Br₂; -OC₉F₁₇Br₂; -OC₁₀F₁₉Br₂;
- OCF₁I₂; -OC₂F₃I₂; -OC₃F₅I₂; -OC₄F₇I₂; -OC₅F₉I₂; -OC₆F₁₁I₂; -OC₇F₁₃I₂; - OC₈F₁₅I₂; -OC₉F₁₇I₂; -OC₁₀F₁₉I₂;
- CF₃; -C₂F₅; -C₃F₇; -C₄F₉; -C₅F₁₁; -C₆F₁₃; -C₇F₁₅; -C₈F₁₇; -C₉F₁₉; -C₁₀F₂₁;
- CF₂H; -C₂F₄H; -C₃F₆H; -C₄F₈H; -C₅F₁₀H; -C₆F₁₂H; -C₇F₁₄H; -C₈F₁₆H; - C₉F₁₈H; -C₁₀F₂₀H;
- CF₂Cl; -C₂F₄Cl; -C₃F₆Cl; -C₄F₈Cl; -C₅F₁₀Cl; -C₆F₁₂Cl; -C₇F₁₄Cl; -C₈F₁₆Cl; - C₉F₁₈Cl_{;} -C₁₀F₂₀Cl;
- CF₂Br; -C₂F₄Br; -C₃F₆Br; -C₄F₈Br; -C₅F₁₀Br; -C₆F₁₂Br; -C₇F₁₄Br; -C₈F₁₆Br; - C₉F₁₈Br; -C₁₀F₂₀Br;
- CF₂I; -C₂F₄I; -C₃F₆I; -C₄F₈I; -C₅F₁₀I; -C₆F₁₂I; -C₇F₁₄I; -C₈F₁₆I; -C₉F₁₈I; - C₁₀F₂₀I;
- CF₁H₂; -C₂F₃H₂; -C₃F₅H₂; -C₄F₇H₂; -C₅F₉H₂; -C₆F₁₁H₂; -C₇F₁₃H₂; -C₈F₁₅H₂; - C₉F₁₇H₂; -C₁₀F₁₉H₂;
- CFCl₂; -C₂F₃Cl₂; -C₃F₅Cl₂; -C₄F₇Cl₂; -C₅F₉Cl₂; -C₆F₁₁Cl₂; -C₇F₁₃Cl₂; - C₈F₁₅Cl₂; -C₉F₁₇Cl₂; -C₁₀F₁₉Cl₂;
- CF₁Br₂; -C₂F₃Br₂; -C₃F₅Br₂; -C₄F₇Br₂; -C₅F₉Br₂; -C₆F₁₁Br₂; -C₇F₁₃Br₂; - C₈F₁₅Br₂; -C₉F₁₇Br₂; -C₁₀F₁₉Br₂; and
- CF₁I₂; -C₂F₃I₂; -C₃F₅I₂; -C₄F₇I₂; -C₅F₉I₂; -C₆F₁₁I₂; -C₇F₁₃I₂; -C₈F₁₅I₂; -C₉F₁₇I₂; -C₁₀F₁₉I₂.

Commercially available ionic fluoropolyethers suitable for the present invention are, for example, known also under the trade names Fomblin^{®}, (Solvay Solexis), Fluorolink^{®} (Solvay Solexis), Krytox^{®} (DuPont) and Demnum^{®} (Daikin Kogyo Co. Ltd.). These compounds are available in a substantially pure form, and are also sometimes supplied as a microemulsion in water, such as Fomblin^{®} FE 20C or Fomblin^{®} FE 20 EG.

Suitable ionic fluoropolyether structures which are commercially available are as follows:
Fluorolink^{®} C and Fluorolink^{®} C 10:
   HOOC-CF₂-(OCF₂CF₂)ₙ-(OCF₂₎ₘ-O-CF₂-COOH where m+n = 8 to 45 and m/n = 20 to 1 000
Fluorolink^{®} F 10:
   PO(OH)_{3-y}(EtO)ₓ]_{y}-CH₂-CF₂-(OCF₂CF₂)ₙ-(OCF₂)ₘ-O-CF₂-CH₂(EtO)ₓ]_{y}PO(OH)_{3-y}
      where m+n = 8 to 45 and m/n = 20 to 1 000
Krytox^{®} 157 FSL
   F-[CF(CF₃)CF₂O]ₙ-CF(CF₃)-COOH where n ∼14 (Mₙ = 2 500),
   including Krytox^{®} 157 FSM (Mₙ = 3 500-4 000) and Krytox^{®} 157 FSH (Mₙ = 7 000-7 500)
Demnum^{®} SH
   CF₃-CF₂-CF₂-O-(CF₂-CF₂-CF₂O)ₘ-CF₂-CF₂COOH (molecular weight 3 500).

The component comprising an ionic fluoropolyether or a precursor thereof may be a viscous liquid at 60 °C with viscosities ranging from about 5 mPas to about 1 000 000 mPas, about 10 mPas to about 500 000 mPas or preferably about 30 mPas to about 50 000 mPas.

The ionic fluoropolymers may be insoluble in water.

Usually, the ionic fluoropolymers are oligomers and/or colloids which may be insoluble in water. Typically, the mean particle size of those oligomers and/or colloids dispersed in water is between 1 and 200 nm measured using laser light scattering (US 7,094,851).

The term "counter-ionic agent" is intended to denote any compound bearing an ionic charge opposite to the charge of the ionic groups of the ionic fluoropolymer. In the present invention, the counter ionic agent comprises, or consists of, surface charged nanoparticles.

The counter-ionic agent and the ionic fluoropolymer upon their mixture form a complex in which the electronic charge present on the ionic groups of the ionic fluoropolymer is at least in part balanced by the electronic charge present on the counter-ionic agent, as explained in detail below. Such complexes, i.e. an ionic fluoropolymer charge balanced with the counter-ionic agent, will generally be in the form of a network of ionic fluoropolymer molecules and counter-ionic agent species extending over the entire coating, so that the coating can be regarded as "cross-linked".

The counter-ionic agent of this invention includes surface charged nanoparticles, such as nanoparticles of intrinsically conductive polymers.

In one embodiment, the counter-ionic agent of this invention consists of surface charged nanoparticles, such as nanoparticles of intrinsically conductive polymers.

The multiple charges present in the surface charged nanoparticles form a complex with multiple points of interactions with the ionic fluoropolymer, resulting in a stable coating.

Examples of such nanoparticles include nanoparticles of colloidal organic salts, organic colloidal polymers, polystyrenesulfonate, dyes and inks, and intrinsically conducting polymers, IPC.

Non-charged nanoparticles may be provided with surface charges by coating with polyelectrolytes such as cationic polyelectrolytes, for example polyethylenimine (PEI).

If nanoparticles contain surface functional groups, for example, by treating them with organic compounds like carboxylic acids, sulfates, phosphates, silanes, diols and polyols, a cationic polyelectrolyte can e.g. be used to bridge the nanoparticles with an anionically charged fluoropolymer.

The surface charged nanoparticles typically are non-water soluble organic molecules in form of single molecules, colloids, oligomers and/or polymers.

The size of these surface charged nanoparticles dispersed in a liquid in one embodiment is between 5 and 500 nm, in a further embodiment is between 10 and 200 nm, and in still a further embodiment is between 20 to 100 nm.

The particles size of surface charged nanoparticles dispersed in a liquid, such as water, may be measured by laser Doppler technique. For example, Ormecon™, a polyaniline dispersion, is available in form of 10 to 50 nm particles measured by laser Doppler technique.

The surface charged nanoparticles in one embodiment include, or consist of, an intrinsically conductive polymer.

The term "intrinsically conductive polymer" (ICP) is intended to denote organic polymers containing polyconjugated bond systems such as double and triple bonds and aromatic rings which have been doped with electron donor or electron acceptor dopants to form a charge transfer complex having an electrical conductivity of at least about 10⁻⁶ S/cm by the four-in-line probe method.

Dopants act as charge balancing counterions to the ICP, as well as keeping the ICP dispersed in water.

These dopants are mostly anionic water soluble materials like single ions, anionic surfactants, anionic polyelectrolytes including polyacrylic acid, polystyrene sulfonic acid and derivatives, or combination thereof.

Examples of ICPs are ICPs made from polymers like polyaniline and substituted polyanilines, polypyrrole and substituted polypyrroles, polyacetylene and substituted polyacetylenes, polythiophene and substituted polythiophenes, polyphenylene such as polyparaphenylene and substituted poly(para)phenylens, polyazine and substituted polyazines, poly-p-phenylene sulfide and substituted poly-p-phenylene sulfides, as well as mixtures and/or copolymers thereof.

Typical commercially available intrinsically conductive polymers are poly(3,4-ethylenedioxythiophene) PEDOT supplied by H.C. Starck, GmbH and called Clevios™ P or PH now (former Baytron^{®}, Baytron^{®}-P or -PH). Exemplarily there may also be mentioned substituted polythiophenes like polythienothiophene, polyaniline (Covion Organic Semiconductors GmbH - Frankfurt and Ormecon™ - Ammersbek), polypyrrole (Sigma-Aldrich, St. Louis, MO), polyacetylenes, and combination thereof. Polyacetylene, poly(N-substituted pyrrole), poly(N-substituted aniline), poly(para-phenylene), poly(phenylenesulfide) including their doping systems also can be used as the intrinsically conductive polymer.

The use of intrinsically conductive polymers as the counter-ionic agent yields coatings with excellent breathability and is particularly advantageous for coating the outer and inner surface of pores and/or for ultra-thin coatings on substrates, especially fluoropolymer substrates.

The use of intrinsically conductive polymers as the counter-ionic agent, furthermore, allows the production of coatings having an excellent balance of antistatic properties, fire retardance and at the same time breathability.

Moreover, the use of intrinsically conductive polymers yields highly antistatic coatings having excellent adhesion properties. Additionally, intrinsically conductive polymers can be used for oleophobic coatings.

Intrinsically conductive polymers are available as small nanoparticles stabilized in water based dispersions or organic formulations.

In one embodiment, aqueous dispersions of [poly(3,4-ethylenedioxy-thiophene) poly(styrene sulfonate)] intrinsically conductive polymers in form of nanoparticles such as in Clevios™ P or PH (former Baytron^{®} P or PH) are used.

The size of the dispersed nanoparticles, which are hence in a swollen state, in one embodiment is between 5 and 500 nm, in a further embodiment is between 10 and 200 nm, and in still a further embodiment is between 20 to 100 nm.

The particles size of dispersed nanoparticles of intrinsically conductive polymers may be measured by laser Doppler technique. For example, Ormecon™, a polyaniline dispersion, is available in form of 10 to 50 nm particles measured by laser Doppler technique.

Furthermore, the mean size of the dispersed nanoparticles in one embodiment is between 5 and 500 nm, in a further embodiment is between 10 and 200 nm, and in still a further embodiment is between 20 to 100 nm.

The mean swollen particle size of dispersed nanoparticles of intrinsically conductive polymers may be measured by ultracentrifugation. For example, Clevios™ P (former Baytron^{®} P) grades have been measured by ultracentrifugation and the results are reported in S. Kirchmeyer, K. Reuter in J. Mater. Chem., 2005, 15, 2077-2088.

In the final coating, the ionic fluoropolymer and the counter-ionic agent will be present in the form of a complex.

In one embodiment, the amount of counter-ionic agent or its precursor is selected so that the amount of counter-ionic agent is from 0.05 to 1.0 charge equivalents, in a further embodiment is from 0.1 to 0.99 charge equivalents, in still a further embodiment is from 0.15 to 0.99 charge equivalents, in still a further embodiment is from 0.2 to 0.99, and in still a further embodiment is from more than 0.5 to 0.99 charge equivalents of the amount of ionic groups present in the ionic fluoropolymer in the final coating.

This means that in those embodiments 5 to 100 %, 10 to 99 %, 15 to 99 %, 20 to 99 % and more than 50 to 99 %, respectively, of the ionic charges of the ionic fluoropolymer in the final coating are balanced by the ionic charges of the intrinsically conductive polymer, and hence in those embodiments 5 to 100 %, 10 to 99 %, 15 to 99 %, 20 to 99%, and more than 50 to 99 %, respectively, of the ionic fluoropolymer in the final coating are cross-linked by the intrinsically conductive polymer, and thus present in the form of a complex.

If the amount of counter-ionic agent is too low, the water swelling of the mostly ionic fluoropolymer coating will be comparatively high. This will lead to a hydrophilic surface. On the other hand, if the amount of counter-ionic agent is too high, free counter-ionic agent will be embedded by the polymer chains of the ionomer without contributing to cross-linking, leading e.g. to leachability of the coating and again hydrophilicity of coating.

The amount of intrinsically conductive polymer selected to provide a charge balance in the range of 5 to 100 %, in the range of 10 to 99%, in the range of 15 to 99 %, in the range of 20 to 99 %, and in in the range of from more than 50 to 99 %, respectively, allows for the production of coatings having an unique balance of properties including antistatic, fire retardancy, breathability, chemical resistance and mechanical properties.

If more than 50 % of the ionic charges of the ionic fluoropolymer in the final coating are balanced by the ionic charges of the counter-ionic agent and hence cross-linked, a drastic reduction of water uptake and hence swelling can be achieved.

Due to the complex formation of the components, the ionic fluoropolymer and the surface charged nanoparticles, the coating has a comparatively high electrical conductivity but a comparatively low conductivity for protons.

The coating in the article of the present invention may be an "outer coating", i.e. a coating which is present as a substantially continuous layer ("monolithic coating"), or a discontinous e.g. dot-like pattern on an outer surface of the substrate, and/or an "inner coating", i.e. a coating present on the inner and outer surface of the pores of a porous substrate, but not occluding them.

The coating may also completely fill the pores of the porous substrate, i.e. the coating may be fully imbibed in the substrate, thus occluding the pores.

An outer, e.g. monolithic, coating may be present on one side or on both sides of a substrate.

A monolithic coating may also form
a) an intermediate layer between two substrates, e.g. two microporous membranes or one microporous membrane and one textile layer, or
b) part of a multicoated layer on a substrate, e.g. one layer between two other coatings or the topcoating at the most outer surface.

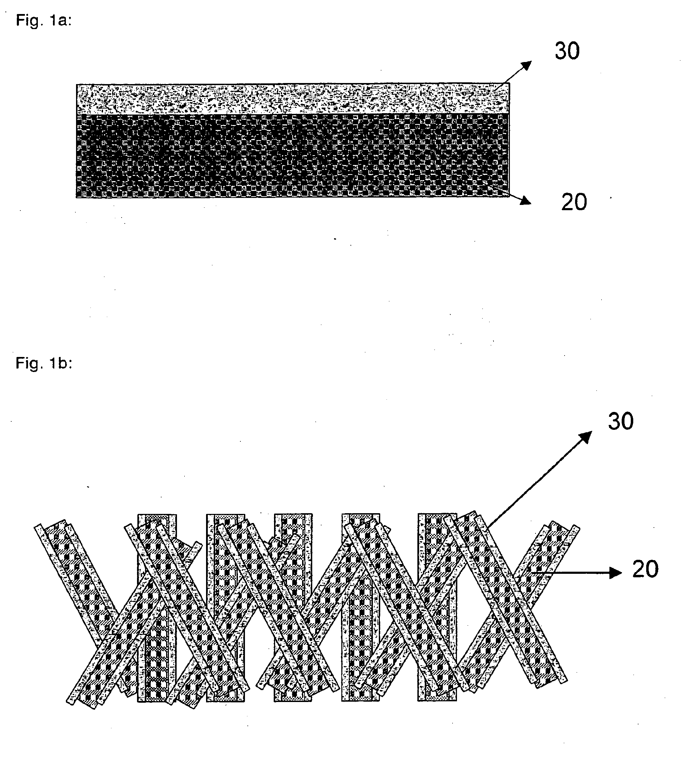

Figure 1 a shows a schematic drawing of a monolithic coating 30 in the form of a layer on an outer surface a substrate 20.

As a monolithic coating is usually airtight, in case of a porous substrate, air flow through the coated article will be prevented by a monolithic coating. By "airtight layer" and by "prevention of airflow" is meant that no airflow is observed for at least two minues as determined by the Gurley test described in the experimental part.

The thickness of the final coating for monolithic coatings in one embodiment is in the range of 0.05 to 25 micrometer. Within this range a skilled person will be able to find the most suitable thickness depending on the intended use.

For achieving an extraordinary balance of properties for the coated substrate, such as MVTR and antistatic properties, MVTR and oleophobicity, MVTR and flame retardency, the thickness of the coating for monolithic coatings may be in the range of 0.075 to 25 micrometer.

If the coating is thinner than 0.05 micrometer the durability of the coating will by low.

In one embodiment, the laydown of the final coating on the substrate is from 0.1 to 10 g/m² based on the outer surface of the substrate.

For example, the lowest laydown for a monolithic coating on ePTFE starts usually at 0.3 g/m² on a membrane.

Laydown and coating thickness will effect durability and breathability (MVTR) and should be adjusted depending on the intended use.

Breathability or moisture vapour transport rate of monolithic coated porous substrates, such as ePTFE films, is characterized by the MVTR value. Typically, the MVTR of a substrate, in particular an ePTFE substrate, with a monolithic coating on the porous membrane will be above 25 000 g/m² 24 h. In one embodiment, the MVTR is adjusted to be above 40 000 g/m² 24 h, and in a further embodiment, the MVTR is above 60 000 g/m² 24h.

The MVTR of the coated article of the invention remains high at low relative humidity.

A schematic drawing of an inner coating present on the inner and outer surface of the pores 20 on a porous substrate 30 is shown in Figure 1b.

Such an inner coating is in the form of an air permeable coating, i.e. the coating is present on the inner and outer surface of the pores of the substrate without, however, occluding the pores.

The inner coating results in an air permeable porous substrate after coating, provided, of course, that no additional monolithic coating is applied to the substrate which prevents air flow. By air permeability is meant the observation of a certain volume of air through a defined area of material as determined by the Gurley test described below. Inner coatings allow the construction of air permeable scaffolds with functionalized surfaces, particularly on microporous substrates such as thin membranes, for example.

The thickness of an inner coating in one embodiment is above 0.05 micrometer.

Inner coatings may be applied to ultra thin substrates below a thickness of 500 nanometer and may also be applied to ultra thin substrates below a thickness of 250 nanometer.

Inner coatings may furthermore be applied for the coating of microporous membranes, such as ePTFE. For an inner coating, the mean flow pore size of ePTFE may be between 0.05 micrometer and 15 micrometer, in a further embodiment may be between 0.1 micrometer and 10 micrometer.

In another embodiment, the coating is formed on a porous substrate such that all pores are completely filled, i.e. fully imbibed, with the coating material, and hence the pores are occluded.

Fully imbibed coatings are mainly applied in ultra thin substrates. Thus, a fully imbibed coating may be applied to a substrate with a thickness of 25 micrometer or below, or may be applied to a substrate with a thickness of 15 micrometer or below. Thicker constructions can be made by layering these fully imbibed articles.

Of course, one or more monolithic coatings on the one hand, and inner coatings or fully imbibed coatings on the other hand, may be applied a) simultaneously and/or b) step by step to a substrate. For example, a porous substrate may have a monolithic coating on at least one outer surfaces and an inner coating within the pores.

Monolithic coatings according to the invention specifically allow the production of articles being characterized by excellent adhesion strength of the coating to the substrate, in one embodiment above 300 N/645 mm² and in a further embodiment above 500 N/645 mm² when tested in the Z-test. This high adhesion level of above 300 N/645 mm² and above 500 N/645 mm² is even obtained if the substrate is ePTFE.

The hydrophilicity and the hydrophobicity properties of a coated polymeric substrate can easily be set by selection of the counter-ionic agent and by selection of the ionic fluoropolymer, and can be quite different from the components used alone. For example, in the prior art using intrinsically conductive polymers coated on surfaces creates hydrophilic surfaces wetted easily by water. But in this invention, for example, using intrinsically conductive polymers as the counter ionic agent for a fluoroionomer enhances hydrophobicity of the surface.

The present invention allows the production of oleophobic articles having an improved oil rating. The oil rating (AATCC test method 118-2000) describes how strongly a porous surface repels oils. A high oil rating is strongly repellent to oils. Oleophobic articles are usually characterized by oil ratings greater than or equal to 2, or even higher than 4, i.e. the coatings at the surface of the article preferably repel any liquid with a surface tension higher than 30 mN/m (oil rating 2) or even higher than 25 mN/m (oil rating 4).

The monolithic coatings according to this invention in one embodiment repel any liquid with a surface tension higher than 23 mN/m.

The monolithic coatings in one embodiment also pass the Suter test (water pressure of 0.2 bar for 60 s).

In addition to the complex formation and film forming properties, the ionic groups of the ionic fluoropolymer act as a non-volatile - non-leaching - solvent stable dopant for the intrinsically conductive polymer. Without the dopant, the ICP would loose conductivity over time.

The invention allows the production of coatings which in one embodiment yield a surface resistance of below 10¹¹ Ohm/square, in a further embodiment yield a surface resistance of below 10⁹ Ohm/square, and in still a further embodiment yield a surface resistance of between 10⁴ to 10⁸ Ohm/square.

The charge decay time (CDT), measured according DIN EN 1149-3, describes the antistatic performance of an article. For articles according to this invention the CDT in one embodiment is below 4 s, in a further embodiment is below 1 s, in still a further embodiment is below 0.5 s, and in still a further embodiment is below 0.01 s at 20 % relative humidity.

The invention further allows the production of articles, wherein the coated substrate has a water contact angle of 90 ° or higher. These articles are considered hydrophobic. This is a surprising result when one considers that both the ionic fluoropolymers and the charged nanoparticles are generally easily wetted by water.

Thus, it has been surprisingly found that the combination of ionic fluoropolymer with charged nanoparticles such as intrinsically conductive polymers results in surfaces with extraordinary low surface energies, with both hydrophobic and oleophobic properties. This combination indicates the formation of fluorine enriched surfaces in the complex.

It is possible to provide an article comprising a non-conductive substrate and a coating thereon comprising an ionic fluoropolymer and a counter-ionic agent comprising surface charged nanoparticles by coating the article with a precursor of the ionic fluoropolymer in a first step and carrying out an ion-exchange reaction in a second step. Such ion exchange reactions and the conditions therefor are well-known to skilled persons.

However, in one embodiment, the coating is produced according to the process as described in the following. In a first step (step a)) a mixture of an ionic fluoropolymer or a precursor thereof, and a counter-ionic agent comprising surface charged nanoparticles or a precursor thereof, in any of the embodiments described above, is made. Mixing of the components is carried out until the mixture is homogeneous, i.e. all components are evenly distributed, therein. In a second step, the mixture is then applied onto a substrate.

The sequence of producing the mixture of the components in a first step and applying the mixture onto the substrate only in a second, subsequent step allows for a thorough mixing of the components, and hence, to an entirely homogeneous and even distribution of the two components in the mixture and, consequently, in the final coating. This, in turn, contributes to the excellent properties of the coating and the resulting article. Particularly, by the pre-mixing step, it is ensured that the coating has an extraordinary durability on the substrate and none of the components, in particular the surface charged nanoparticles, e.g. of an intrinsically conductive polymer, is easily leached out by contact with water and/or mechanical abrasion. The mixture in step a) may be in liquid form. This can either be so because the mixture of the components is liquid as such, or because one or all of the components have been dissolved, emulsified or dispersed in a solvent.

The mixture of the components as liquid in one embodiment has a viscosity greater than 50 mPas, in a further embodiment has a viscosity greater than 60 mPas, and in still a further embodiment has a viscosity greater than 70 mPas at 25 °C.

The coating mixture comprising the ionic fluoropolymer and the counter ionic agent may have a surface tension lower than about 35 mN/m, or may have a surface tension lower than 30 mN/m, or may even may have a surface tension lower than 20 mN/m.

Typically, the two component complex formulation may have a surface tension lower than about 30 mN/m.

Such low surface tensions of the ionic fluoropolymer and counter ionic agent formulations are helpful for coating substrates, particularly fluoropolymers such as PTFE, which have very low surface energies. For most applications, no coating additives are required.

The ionic fluoropolymer or its precursor may be present in the mixture in a concentration of from 10 weight % solids to 0.1 weight % solids, in a further embodiment may be present in a concentration of from 5 weight % solids to 0.5 weight % solids.

As mentioned, precursors of ionic fluoropolymers and counter-ionic agents are such compounds which can be transferred into ionic fluoropolymers and counter-ionic agents, respectively, by simple chemical reactions.

Usually, in step a) of the process of the invention, a mixture of precursors of the ionic fluoropolymer and/or counter-ionic agent will be prepared. In one embodiment, the mixture is then subjected to conditions under which a reaction of the precursor(s) to the final ionic fluoropolymer and the counter-ionic agent takes place before the application of the mixture onto the substrate.

In this embodiment, the mixture contains the ionic fluoropolymer and the counter-ionic agent and not only their precursors before coating the substrate in step b).

For example, a mixture can be prepared with one component being a precursor of an ionic fluoropolymer with -SO₃⁻ groups. In this precursor, these groups bear H atoms which are covalently bonded to the -SO₃⁻ group so that this group is not in the form of bearing an electric charge. As the second component, a precursor of the surface charged nanoparticles may be used which may be a salt. Both components can be mixed in liquid form together at ambient temperature, but the precursors will not react under those condition.

In this example, the mixture may be heated to temperature where a reaction between the precursors takes place so that the ionic fluoropolymer with -SO₃⁻ groups and the surface charged nanoparticles are formed.

However, also the mixture of the precursor(s) of the ionic fluoropolymer and/or the counter-ionic agent can be applied to the substrate. For obtaining the final coating it is then required that the substrate onto which the mixture has been applied is subjected to conditions under which a reaction of the precursor(s) to the final ionic fluoropolymer and the counter-ionic agent takes place.

When the ionic fluoropolymer and the counter-ionic agent are mixed, either upon their formation from the precursor(s) or when they are mixed as such, a complex of the ionic fluoropolymer and the counter-ionic agent is formed in which the electric charges of the ionic fluoropolymer are at least in part balanced by the electric charges of the counter-ionic agent. It is believed that this leads to a rearrangement of the ionic fluoropolymer molecules, or at least their ionic groups, and the counter-ionic agent species in the mixture and hence to a type of "cross-linking" of the ionic fluoropolymer molecules with the counter-ionic agent species within the mixture. The basic material properties of the fluoropolymer like low surface energy, chemical stability etc. will not be affected.

Therefore, in the final coating, the ionic fluoropolymer and the counter-ionic species will be present in the form of said complex.

Typically, the mixture containing the complex of the ionic fluoropolymer and the counter-ionic agent present on the substrate will be dried, especially if the applied mixture comprising the complex of the ionic fluoropolymer and the counter-ionic agent still comprises a solvent. This drying step can be effected by known techniques in the art, such as reduction of pressure, heating and combinations thereof.

The coating after step b) may be heated to a temperature of 100 to 200 °C, in a further embodiment may be heated to 150 to 190 °C, and in still a further embodiment may be heated to 160 to 180 °C.

If the temperature is too low, the production time will be too long and water hydration of the ionic fluoropolymer still can be observed. If the temperature is too high, degradation might start.

In the following, several specific embodiments of the coatings are described. The coatings in these embodiments are also part of the invention. If not mentioned otherwise, the above mentioned embodiments of the mixture, its components, and the coating apply also in these specific coating embodiments.

In a first embodiment, the article comprises a non-conductive substrate and a coating thereon which comprises an ionic fluoropolymer and a counter-ionic agent which comprises surface charged nanoparticles, in particular of an intrinsically conductive polymer, and optionally further comprises additional cations.

In this embodiment, the antistatic properties of the article will be enhanced. It is particularly surprising that this combination at the same time yields an unique balance of antistatic properties and breathability.

In a second embodiment, the article comprises a porous, non-conductive substrate and a monolithic coating thereon which comprises an ionic fluoropolymer and a counter-ionic agent which comprises surface charged nanoparticles, in particular of an intrinsically conductive polymer, and optionally further comprises additional cations.

This embodiment allows the provision of a unique balance of antistatic, water tightness and extraordinary breathability. This embodiment therefore is particularly suitable for providing waterproof articles such as garments. The extraordinary breathability is also observed at low relative humidity.

The thickness of the monolithic coating in the case of the extremely breathable monolithic coating may be in the range of 0.05 to 15 micrometers, and may even be in the range of 0.75 to 12 micrometers.

Without being bound by theory it is believed that the necessary temperature and moisture gradients to allow a certain moisture flow through the garment are lowered by both the extraordinarily low thickness and by the nature of the coating.

The lay down on the porous substrate in the case of the extremely breathable monolithic coating may be in the range of 0.3 g/m² membrane to 5.0 g/m² membrane and may even be in the range of 0.5 g/m² membrane to 4.0 g/m² membrane.

The extremely breathable monolithic coating allows the provision of watertight porous substrates having MVTR values (Hohenstein Standard Test Specification BPI 1.4) of more than 20 000 g/m² 24h. If ePTFE is used as the substrate, MVTR values of more than 80 000 g/m² 24h can be obtained. Simultaneously the Suter test (water pressure of 0.2 bar for 60 s) is passed.

In a third embodiment, the article comprises a porous, non-conductive substrate and an inner coating thereon which comprises an ionic fluoropolymer and a counter-ionic agent which comprises surface charged nanoparticles, in particular of an intrinsically conductive polymer, and optionally further comprises additional cations.

In this embodiment, the surface charged nanoparticles and optionally further cations are embedded in a polymeric matrix. In the case of microporous membranes, the article is air permeable and antistatic. The surface charged nanoparticles are protected by the matrix and prevent charge built up. The antistatic air permeable coating on substrates creates articles with a charge decay time (measured according DIN EN 1149-3) less than 1 second. The articles can be used as static protective workwear or in air filtration or venting applications to prevent charge built up.

In a fourth embodiment, the article comprises a porous, non-conductive substrate and an inner coating thereon which comprises an ionic fluoropolymer and a counter-ionic agent which comprises surface charged nanoparticles, in particular of an intrinsically conductive polymer, and optionally further comprising additional cations, with the oil rating of the coated substrate being greater than or equal to 1.

This embodiment allows the provision of coatings with a unique balance of extremely high adhesion of the coating to the substrate and high oleophobicity. This aspect of the invention allows a durable protection of air permeable membranes against contamination. The source of contaminants are oils, gasoline, sweat, lotion and other liquids. Commonly extraordinary performance according to the fourth embodiment is only obtained as far as the contact angle against water is higher than 90 °C and the F/H ratio of the coating is equal or higher than 1.

In a fifth embodiment, the article comprises a porous, non-conductive substrate and a monolithic coating thereon which comprises an ionic fluoropolymer and a counter-ionic agent which comprises surface charged nanoparticles, in particular of an intrinsically conductive polymer, and optionally further comprises additional cations.

The oleophobic surface of the coated side of a substrate in the fifth embodiment being coated in monolithic form, may repel liquids with a surface tension of less than 30 mN/m, and may even repel liquids with a surface tension of less than 26 mN/m.

In this embodiment, the monolithic coated article is highly water vapour permeable, MVTR values (Hohenstein Standard Test Specification BPI 1.4) of more than 20 000 g/m² 24h, but selective such that it prevents transmission of harmful organic agents and microbes. If ePTFE is used as the substrate, MVTR values of more than 80 000 g/m² 24h can be obtained.

The monolithic layer forms the barrier for microbes and low energy liquids and chemicals.

In a sixth embodiment, the article comprises a non-conductive substrate and a coating thereon which comprises an ionic fluoropolymer and a counter-ionic agent which comprises surface charged nanoparticles, in particular of an intrinsically conductive polymer, optionally further comprises additional cations, with the coating being colored.

In this embodiment, a translucent and slightly colored coating may be obtained. In this embodiment the ionic fluoropolymer may be a perfluoropolyether and/or perfluorinated ionomer and the counter-ionic agent may be polythiophene for blue, polyaniline for green and polypyrrole for black/gray.

In a seventh embodiment, the article comprises a non-conductive substrate and a coating thereon which comprises an ionic fluoropolymer and a counter-ionic agent which comprises surface charged nanoparticles, in particular of an intrinsically conductive polymer, with the counter-ionic agent further comprising ions having antimicrobial activity.

The term "antimicrobial activity" as used herein is intended to denote any activity in killing microorganisms such as bacteria, fungues, viruses etc.

For example, ions having antimicrobial activity comprise Ag, Au, Pt, Pd, Ir and Cu, Sn, Bi and Zn ions, and charged organic species, a zwitterionic compound or a polycation such as organic cationic species, like cationic polyelectrolytes, N-alkylated quaternary ammonium cations and derivatives, polymers from N-alkylated 4-vinyl pyridine, quaternized ethyleneimine, quaternized acrylic acid derivatives and their copolymers.

The use of such coatings provide antimicrobial properties in combination with increased oleophobicity. These coatings furthermore may prevent biofilm buildup and/or allow the combat of biofilms. Biofilms are complex aggregations of microorganism marked by the excretion of a protective and adhesive matrix.

These embodiments are particularly attractive in the case of inner coatings as the outer and the inner side of the article is protected from bacteria and/or biofilm. Thus other properties, such as breathability and air permeability are upheld over a long time.

For achieving an unique balance of antistatic properties, contamination resistance and breathability, as well as antibacterial activity, a fluoropolyether may be used as ionic fluoropolymer.

Suitable monomers for charged organic species, a zwitterionic compound or a polycation comprise cationic monomers like quaternary ammonium salts of substituted acrylamide, methacrylamide, acrylate, methacrylate, 2-vinyl pyridine, 4-vinyl pyridine, 2-vinyl piperidine, 4-vinyl piperidine, vinylamine, diallylamine.

Preferred polycations are poly(4-vinylpyridine) including alkylated poly(4-vinylpyridine), polyethyleneimine (PEI) and alkyl substituted PEI, poly(diallyldimethylammonium) (PDADMA), poly(allylamine hydrochloride), polyvinylamine and copolymers and mixtures thereof.

In another aspect, the polycations may comprise at least one quaternary amine ion.

Use of polycations as counter-ionic agents is suitable for enhancing the antimicrobial properties of the coating, particularly on membranes, paper and textiles and in the field of permeability adjustment as well as for surface modification to bind active species.

In one embodiment, the ions having antimicrobial activity comprise Ag, Au, Pt, Pd, Ir and Cu, Sn, Bi and/or Zn ions, in a further embodiment the ions having antimicrobial activity comprise Ag, Cu and/or Zn ions, and in still a further embodiment the ions having antimicrobial activity comprise Ag ions.

In the embodiment where the ions having antimicrobial activity comprise Ag ions (Ag⁺), the coatings can be made by incorporation of silver acetate, silver carbonate, silver nitrate, silver lactate, silver citrate and oxides as well as mixtures and derivatives thereof, as precursors of Ag⁺ in the mixture for preparing the coating.

It is also possible and may be advantageous for specific effectiveness to use combination of the above mentioned ions having antimicrobial activity, such as combinations of silver and copper, silver and zinc, silver and cationic polyelectrolytes.

In the embodiments where the ions having antimicrobial activity comprise Ag, Au, Pt, Pd, Ir and Cu, Sn, Bi and/or Zn ions, the ions having antimicrobial activity optionally may further comprise charged organic species, a zwitterionic compound or a polycation such as organic cationic species, like cationic polyelectrolytes, N-alkylated quaternary ammonium cations and derivatives, polymers from N-alkylated 4-vinyl pyridine, quaternized ethyleneimine, quaternized acrylic acid derivatives and their copolymers.

The coating can be used in articles useful in consumer healthcare, such as sterile packaging, clothing and footwear, personal hygiene products, medical devices like catheters, implants, tubes, wound closures including suture garn, dressings, air filters, water and liquid filters, etc..

The invention allows the production of coated articles passing the "Zone of Inhibition" test for 24 h, or even for 48 h or more.

Depending on the coating form, monolithic and/or inner coating, the air flow properties also may easily be adjusted. In the case of inner coatings, it is particularly advantageous that the formation of biofilms is inhibited on the surface and within the pores.

In an eighth embodiment, the article comprises a porous, non-conductive substrate and a monolithic coating thereon which comprises an ionic fluoropolymer and a counter-ionic agent which comprises surface charged nanoparticles, in particular of an intrinsically conductive polymer, and optionally further comprises additional cations, with the coating being fire and flame resistant.

This embodiment allows the provision of coatings with an unique balance of flame and fire resistance, breathability and high oleophobicity. Simultaneously, the coating is antistatic which is important if the article is in the form of a film or laminate.

The present invention will be further illustrated through the examples described below, and by reference to the following figures:
- Figure 1a:: Schematic sectional view of an article (10) having a polymer porous substrate (20) and a monolithic coating (30) thereon.
- Figure 1b:: Schematic sectional view of an article (10) having a polymer porous substrate (20) and a coating (30) thereon, which is present on the inner and outer surface of the pores ("inner coating").
- Figure 2:: SEM cross-section of the coated ePTFE membrane of Example 3. Magnification: 2000
- Figure 3:: SEM of the surface of the coated Nylon textile of Example 10. Magnification: 500
- Figure 4:: SEM of the surface of the coated ePTFE membrane of Example 18. Magnification: 3500

### Methods and Examples

### a) Oil repellency

Oil repellency was tested according to the AATCC test method 118-2000. The rating scale is 0 - 8, with "0" indicating the poorest degree of repellency. The lowest number that does not wet the substrate is the reported oil rating. High numbers indicate an excellent resistance to wetting oils.
0 is Nujol^{™}, mineral oil (wets)
1 is Nujo^{™,} mineral oil (31.2 mN/m) (repels)
2 is 65/35 Nujol/n-hexadecane (by volume, 29.6 mN/m)
3 is n-hexadecane (27.3 mN/m)
4 is n-tetradecane (26.4 mN/m)
5 is n-dodecane (24.7 mN/m)
6 is n-decane (23.5 mN/m)
7 is n-octane (21.4 mN/m)
8 is n-heptane (19.8 mN/m).

### b) MVTR

### Test of Water Vapor Permeability of Membrane and Laminate according to Hohenstein Standard Test Specification BPI 1.4

Potassium acetate pulp is prepared by stirring potassium acetate at a ratio of 1 000 g potassium acetate to 300 g into distilled water and leave to settle for at least 4 hours. 70 g ± 0.1 g of potassium acetate pulp is filled into each beaker. The beaker is covered with an ePTFE membrane and sealed.

A sample of 10 x 10 cm from the membrane/laminate to be tested is placed between beaker and a water bath at 23°C ± 0.2°C covered with an ePTFE membrane.

Each beaker weight is recorded before (G1) and after (G2) the test.

| | |
|---|---|
| Testing time for ePTFE: | 5 minutes |
| Monolithic coated ePTFE: | 10 minutes |
| Textile laminate: | 15 minutes |
| Calculation of MVTR for ePTFE: | MVTR = ((G2-G1) x 433960)/5 |
| for monolithic coated ePTFE: | MVTR = ((G2-G1) x 433960)/10 |
| for laminate: | MVTR =((G2-G1) x 433960)/15 |

### c) Gurley numbers

Gurley numbers [s] were determined using a Gurley Densometer according ASTM D 726-58.

The results are reported in terms of Gurley Number which is the time in seconds for 100 cubic centimeters of air to pass through 6.54 cm² of a test sample at a pressure drop of 1.215 kN/m² of water.

### d) Mean Flow Pore Size [MFP, micrometer]

MFP was measured using a PMI (Porous Materials Inc.) Capillary Flow Porometer CFP 1500 AEXLS. The membrane was completely wetted with Silwick (surface tension 20 mN/m). The fully wetted sample is placed in the sample chamber. The chamber is sealed, and gas is allowed to flow into the chamber behind the sample to a value of pressure sufficient to overcome the capillary action of the fluid in the pore of the largest diameter. This is the Bubble Point Pressure. The pressure is further increased in small increments, resulting in flow that is measured until the pores are empty of fluid. The applied pressure range was between 0 and 8.5 bar. Beside mean flow pore diameter, the largest and smallest detected pore diameter were detected.

### e) Charge decay time (CDT)

Charge decay time (CDT) was measured according DIN EN 1149-3.

### f) Surface resistivity

Surface resistivity was measured according ASTM D 257 between two parallel electrodes with a square configuration.

### g) Antibacterial properties

The bacteria used in this study were obtained from the American Type Culture Collection (Rockville, Maryland). The materials were tested against Staphylococcus aureus ATCC # 25923 and Pseudomonas aeruginosa ATCC # 27853. The organisms tested were cultured on blood agar media for 24 hours at 34-37 °C. The cultures were observed for colony morphology and purity by Gram Stain.

Material Preparation: Samples were cut on a clean bench into approximately 2.5-cm discs, and then were tested for the presence or absence of antimicrobial activity using the Zone of Inhibition Bioassay.

### Zone of Inhibition Methods(ZOI):

The bacterial cultures were grown up on Trypticase Soy blood agar and aseptically suspended into Mueller-Hinton broth. Cultures were standardized to a Me Farland's 0.5 barium chloride standard as described in a standard method for disc diffusion sensitivity testing P: SC: 318. The standardized cultures were streaked onto Mueller-Hinton agar plates to form a uniform lawn of bacteria. The test material samples were placed aseptically with the desired test surface side down in contact with the agar (see material key for surface tested). The plates were incubated at 34-37 °C for 24 hours. Plates were then observed for the presence or absence of a clear zone of inhibition surrounding the sample, or no visible growth under or on the test material. Zones were measured in millimeters and results recorded.

### h) Four-in-line probe method

For determining the conductivity of the intrinsically conductive polymers the four in-line probe method described in "Laboratory Notes on Electrical Galvanometric Measurements" by H.H. Wieder, Elsevier Scientific Publishing Co. New York, New York (1979) has been applied.

### i) Flame retardance

Flame retardance was determined according to ISO 15025. Film was tested for its burning behavior according ISO 15025 "Horizontal Flame Test". The sample was placed vertically in the test apparatus and exposed for 10 s to the horizontally oriented flame.

### j) Thickness

For the substrate film thickness measurements reported herein, measurements were made using a Heidenhain thickness tester.

The thickness of coatings was calculated using the specific surface area of ePTFE as determined by BET, the laydown, and the density of the coating.

For example, the BET surface area of an ePTFE is 10 m²/g. Dry NAFION^{®} (DuPont) has a density of 1.98 g/m². Thus, a laydown of 1.98 g/m² NAFION^{®} on a flat surface would give a coating with a thickness of 1 micrometer. Assuming that the complete pore surface, i.e. the surface of all inner and outer pores, of said ePTFE is covered with the coating, a laydown of 1.98 g/m² NAFION^{®} will form a coating thickness of 100 nm divided by the weight of the porous ePTFE membrane. Similarily, a laydown of 3.96 g/m² NAFION^{®} will form a coating thickness of 200 nm divided by the weight of the porous ePTFE membrane.

### k) Suter test

The suter test was carried out according AATCC Test 127 - 1989, the membrane sample being fixed even in a holder. The membrane should resist an applied water pressure of 0.2 bar for 2 min.

### l) Microscopy

SEM pictures were made on LEO 1450 VP, samples were sputtered with gold.

### m) Adhesive Force - "Z Test"

A Tappi-T541 (Zwick Germany) device was used, applying the test method according to DIN 54516 "Internal bond strength of paperboard".

Technical Data:
Tappi - T 541- material testing machine
2500 N, Pressing speed: 800 mm/min, Test speed: 600 mm/min,
2 stainless steel sample holders with 5 times 645 mm² (1 inch² single) sample surface each, double-sided adhesive tape 410 B (3M company).

### o) Water contact angle

A sessile drop (4 µl) of bidistilled water was placed on the substrate at 25 °C. The contact angle was measured using a DSA 10 unit (Krüss) after 5 and 30 seconds.

### p) Frazier numbers

Frazier numbers were determined using an Air Permeability Tester III FX 3300 (TEXTEST AG) according ASTM D 737.

### EXAMPLES

### Example 1

198 g Clevios™ P (former Baytron^{®} P, 1.02 % by weight solids of the intrinsically conductive polymer PEDT/PSS [poly(3,4-ethylenedioxythio-phene) poly(styrene sulfonate)] dispersed in water, mean swollen particle size d50 about 80 nm, product information brochure, available from H.C. Starck) and 396 g ethanol were mixed. 62 g Flemion^{®} F 950 in ethanol (ionomer, Asahi Glass Chemical - AGC, 6.3 % solids) was added to 200 g of the Clevios™ P/water/ethanol dispersion under stirring.

An ePTFE membrane (mean flow pore size 0.602 µm, Gurley 3,5 s, thickness 75 µm, area weight 42.8 g/m²) was coated with the dispersion using a Mayer bar 70 setup to obtain monolithic coating thereon.

The lay down was measured with 1.5 g/m² after drying at 140 °C. There was no air permeability of the monolithically coated ePTFE. The surface resistance on the coated side was measured with 22 kOhm/square.

This example represents an antistatic coating on a thick microporous substrate.

### Comparative Example 1

198 g Clevios™ P (same as used in Example 1) and 396 g ethanol were mixed.

An ePTFE membrane (same as in Example 1) was coated with the dispersion using a Mayer bar 70 setup to obtain monolithic coating thereon.

The coated ePTFE membrane showed poor performance. Uncoated and not uniform coated areas were seen side by side. The coating did not adhere well to the ePTFE. The surface resistance on the poorly coated spots was measured with about 30 kOhm/square, surrounded by highly resistive areas with > 200 MOhm/square. No continuous network of coated PEDT/PSS particles as a monolithic coating on ePTFE was observed.

### Example 2

An ePTFE membrane (mean flow pore size 490 nm, Gurley 7 s, thickness 74 µm, area weight 36.8 g/m²) was coated with a mixture of 198.2 g Clevios™ P (same as used in Example 1) and 62.3 g Flemion^{®} F 950 in ethanol (6.3 by solids, lonomer, AGC) and 396.2 g ethanol. The lay down was measured with 0.4 g/m² after drying at 140 °C.

MVTR was measured after coating and repeated at the same spot for five days (results see Table 1).

### Example 3

An ePTFE membrane (mean flow pore size 0,195 µm, Gurley 12 s, thickness 34 µm, area weight 20.6 g/m²) was coated with a dispersion of Clevios™ P and Flemion^{®} F 950 in ethanol (Ionomer, AGC) according to Example 1.

The lay down was measured with 0.3 g/m² after drying at 140 °C. Coating thickness, determined by cross-section SEM, was between 0.5 and 1.0 µm, MVTR see Table 1. Contact angle against water was measured with 125.9° after 5 s and 125.4° after 30 s.

**Table 1:**

| Membrane | MVTR (g/24 h m²) ePTFE | MVTR (g/24 h m²) coated | MVTR (g/24 h m²) coated day 0 | MVTR (g/24 h m²) coated day 1 | MVTR (g/24 h m²) coated day 3 | MVTR (g/24 h m²) coated day 5 |
|---|---|---|---|---|---|---|
| Example 2 | 61 800 | 67 000 | 63 400 | 61 200 | 66400 | 63 800 |
| Example 3 | 80 200 | 80 600 | | | | |

Example 2 and 3 are passing the SUTER test (pressure of 0.2 bar for 2 min). The coated membranes are waterproof.

MVTR measurements on membranes show that the MVTR values are not changing over time. For these ultra thin monolithic layers, the MVTR values are identically with MVTR measured at the uncoated ePTFE membrane. Examples 2 and 3 illustrate an antistatic hydrophobic and waterproof coating on different ePTFE membrane structures.

### Example 4

An ePTFE membrane (mean flow pore size 490 nm, Gurley 7 s, thickness 74 µm, area weight 36.8 g/m²) was coated with a mixture of 198.2 g Clevios™ PH (former Baytron^{®} PH, solid content 1.24 % by weight of the intrinsically conductive polymer PEDT/PSS [poly(3,4-ethylenedioxythiophene) poly(styrene sulfonate)] dispersed in water, mean swollen particle size d50 about 30 nm, product information brochure, available from H.C. Starck) and 62.3 g Flemion^{®} F 950 (6.3 % solids in ethanol, ionomer, AGC) and 396.2 g ethanol.

The lay down was measured with 0.35 g/m² after drying. Surface resistance measured on the coated side was 18 to 29 kOhm/square.

Oil rating measurements at the coated surface and Gurley numbers are seen in Table 2.

### Example 5

An ePTFE membrane (same as in Example 4) was coated just with a mixture of 62.3 g Flemion^{®} F 950 in ethanol (6.3 % solids, lonomer, AGC), 396.2 g ethanol and 198.2 g Clevios™ PH (solid content 1.02 % by weight of the intrinsically conductive polymer PEDT/PSS [poly(3,4-ethylenedioxythiophene) poly(styrene sulfonate)] dispersed in water, mean swollen particle size d50 about 30 nm, product information brochure, available from H.C. Starck).

The laydown was measured with 0.5 g/m² after drying at 180 °C. Oil rating measurements at the coated surface and Gurley numbers are given in Table 2. Surface resistance measured on the air permeable coated membrane was about 50 to 60 kOhm/square.

### Comparative Example 2

An ePTFE membrane (Same as in Example 4) was coated just with a mixture of 62.3 g Flemion^{®} F 950 in ethanol (6.3 % solids, lonomer, AGC), 396.2 g ethanol and 198.2 g water.

The lay down was measured with 0.5 g/m² after drying at 180 °C.

Oil rating measurements at the coated surface and Gurley numbers are seen in Table 2.

### Comparative Example 3

An ePTFE membrane (mean flow pore size 0.195 µm, Gurley 12 s, thickness 34 µm, area weight 20.6 g/m²) was coated just with a mixture of 1 600 g Flemion^{®} F 950 in ethanol (6.0 % solids, lonomer, AGC), 5 428 g ethanol and 2 682 g water.

The lay down was measured with 3.0 g/m² after drying at 120 °C.

Oil rating measurements at the coated surface and Gurley numbers are given in Table 2.

**Table 2:**

| Membrane | Oil rating | Gurley [s] | Comment |
|---|---|---|---|
| Example 4 | (7*) | >> | Monolithic layer |
| Example 5 | 2 | 27 - 32 | Coating on inner and outer surface of pores |
| Comparative Example 2 | 2 | 6.2 -6.4 | Coating on inner and outer surface of pores |
| Comparative Example 3 | (1*) | > 700 | Monolithic layer |

| | | | |
|---|---|---|---|
| (1*) surface repells Nujol TM mineral oil (32.2 mN/m), stable droplet formation (7*) surface repells n-octane (21.4 mN/m), stable droplet formation | | | |

Results for charge decay time (CDT) at 20 % RH and surface resistance see Table 3.

**Table 3:**

| Membrane | Oil rating | Droplet formation | Gurley [s] | Charge decay time [s] | Surface resistance [Ohm / square] |
|---|---|---|---|---|---|
| ePTFE | 0-(1) | | Variable | > 50 | 10¹⁶-10¹⁷ |
| Example 2 | (7*) | n-octane | > > | 0.005 | 20 300 |
| Example 3 | (6-7*) | n-decane | > > | 0.01 | 15 500 - 19 500 |
| | | n-octane | | | |
| Example 4 | (7*) | n-octane | > > | 0.01 | 18 000 - 29 000 |
| Comparative | | | | | |
| Example 2 | 2 | | 6.2 - 6.4 | 2 - 7 | > 10⁶ |
| Example 5 | 2 | | 27 - 32 | 0.01 | 51 000 - 60 000 |

| | | | | | |
|---|---|---|---|---|---|
| (7*) surface repells n-octane (21.4 mN/m) | | | | | |

All lonomer/ICP samples including coating on the inner and outer surface of the pores of the membranes show CDT values less than 0.5 s. The CDT for an ionomer coated air permeable ePTFE (see Comparative Example 2) is in the range of 2 - 7 s.

Table 2 and Table 3 show that the antistatic and oleophobic properties are enhanced for PTFE articles coated with a combination of an ionic fluoropolymer and a counter-ionic agent which comprises surface charged nanoparticles.

### Example 6

An ultra high molecular weight polyethylene membrane (mean flow pore size 0.470 µm, Gurley 48 s, thickness 40 µm, area weight 12.0 g/m², MVTR 42 000 g/m²24h) was dip coated with a mixture of 155.4 g Clevios™ PH (same as used in Example 4), 43.6 g Flemion^{®} F 950 in ethanol (solids 9.0% lonomer, AGC) and 396.2 g ethanol. The membrane was dried at 90 °C for 5 min.

The color of the membrane changed to blue, oil rating was measured with 5, the MVTR was measured with 34 200 g/m²24h and a Gurley number of 336 s indicated air permeability. Surface resistance was measured with 8 000 Ohm/square.

### Example 7

An ultra high molecular weight polyethylene membrane (same as in Example 6) was dip coated with a mixture of 40.4 g doped polyaniline (Ormecon™ 50-D1005W-1, solids 5.0 % by weight, mean particle size 35 nm, product information brochure) in water, 43.6 g Flemion^{®} F 950 in ethanol (solids 9.0% lonomer, AGC) and 396.2 g ethanol. The membrane was dried at 90 °C for 5 min.

The color of the membrane (oil rating 1) at a lay down of 0.8 g/m² changed to green, the MVTR was measured with 28 300 g/m²24h and the Gurley measuremeant indicated no permeability. Surface resistance was measured with 6.6 MOhm/square.

Examples 6 and 7 illustrate adding antistatic properties to microporous polyolefin membranes by various intrinsically conductive polymer formulations in combination with ionic fluoropolymers.

### Example 8

An ePTFE membrane (mean flow pore size 0.858 µm, thickness 75 µm, Gurley 1 s, area weight 38 g/m²) was dip coated with a mixture of 40.4 g doped polyaniline (Ormecon™ 50-D1005W-1, solids 5.0 % by weight) in water, 43.6 g Flemion^{®} F 950 in ethanol (solids 9.0% lonomer, AGC) and 396.2 g ethanol. The membrane was dried at 165 °C for 3 min.

The color of the ePTFE membrane (oil rating 5, not water wettable) at a lay down of 0.65 g/m² changed to green. A Frazier number measurement of 6.2 indicated high air permeability, MVTR was 77 500 g/m²24h. Surface resistance was measured with 44 MOhm/square on the coated side and 85 MOhm/square on the uncoated side.

### Example 9

The film made in Example 3 was tested for its burning behavior according ISO 15025 Horizontal Flame Test. The sample was placed vertically in the test apparatus and exposed for 10 s to the horizontally oriented flame.

After the test Example 3 showed just a hole (60 mm), no burning, melting and dripping was observed.

A comparative film of ePTFE coated with polyurethane (made according US 6,261,678, ePTFE membrane with a MFP size of 200 nm coated with a polyurethane resulting in a film with MVTR of 19 000 g/m²24h) was completely burned, and dripping of molten material was observed.

### Example 10

A 100 % Nylon (Taslan UK red, polyamide) textile was coated with a mixture according Example 4.

The lay down was measured with 1- 2 g/m² after drying.

This coated polyamide fabric was laminated to an ePTFE membrane (area weight 21 g/m², mean flow pore size 195 nm, Gurley 11.6 s). Charge Decay time of the laminate was less than 0.01 s.

Surface resistance: > 200 KOhm / square.

Air permeability (according DIN 53887) at 100 Pa was 0.62 l/m²/s, oil rating textile was 1, and MVTR was 18 200 g/m²24h.

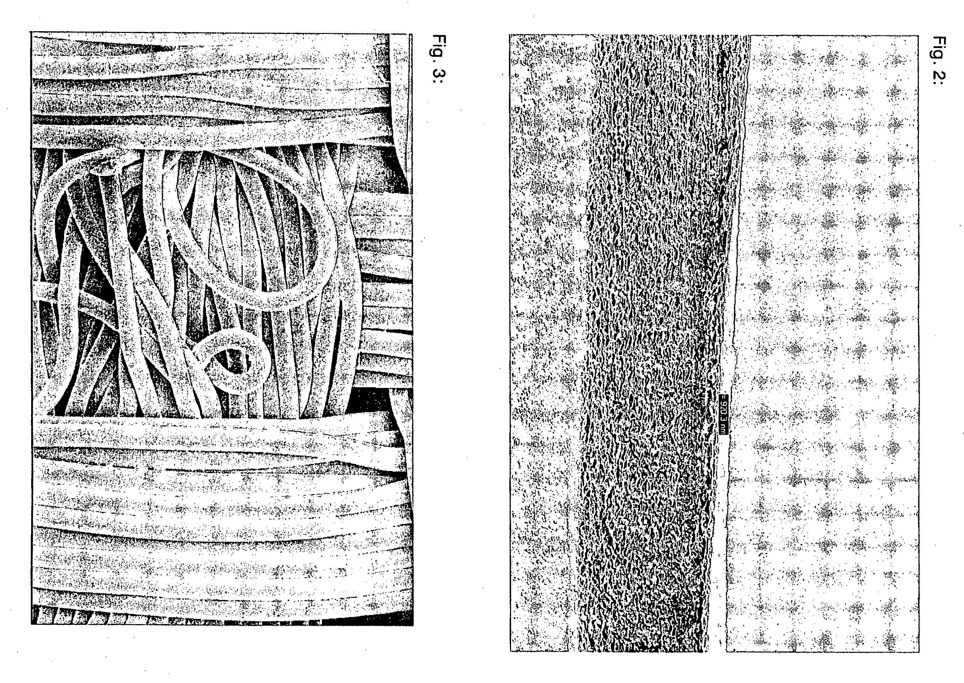

This example and the SEM picture (Fig. 3) illustrates adding antistatic properties to polyamide textiles without changing the morphology of the textile fibers.

### Example 11

A coated membrane according to Example 3 was laminated with the ePTFE side to Taslan UK red (100% Nylon).

MVTR was measured at 20 160 g/m² 24h, the coating according to the invention showed an adhesive force of 823 N / 645 mm² according to the Z-test.

### Example 12

A coated membrane according to Example 3 was laminated with the coated side to Taslan UK red (100% Nylon).

MVTR was measured at 20 730 g/m² 24h, the coating according to the invention showed an adhesive force of 422 N / 645 mm² according to the Z-test.

Example 11 und 12 show that a textile layer can be laminated to both sides of a monolithic coated articles. The adhesion force at the ePTFE membrane side is stronger, the functionality is not changed.

### Example 13

A coated membrane according to Example 3 was laminated with the ePTFE side to Flannel liner (100% Polyester).

MVTR was measured with 23 430 g/m²24h, the coating according to the invention showed an adhesive force of 571 N / 645 mm² according to the Z-test, and the CDT was < 0.01 s.

### Example 14

A coated membrane according to Example 3 was laminated with the coated side to Flannel liner (100% Polyester).

MVTR was measured with 22 370 g/m² 24h, the coating according to the invention showed an adhesive force of 260 N / 645 mm² according to the Z-test, and the CDT was < 0.01 s.

### Example 15

A coated membrane coated according to Example 3 was laminated with the ePTFE side to a nonwoven Nomex (polyaramide) fabric.

The MVTR was 20 400 g/ m² 24h, and the oil rating of the membrane after lamination was 4.

The FR test according ISO 15025 "Horizontal Flame Test", rated 3, fulfills all criteria for protective laminates.

Example 9 for films and Example 15 for laminates illustrate flame protection of articles coated with a combination of ionic fluoropolymers and intrinsically conductive polymers as counter ion agent.

### Example 16

To 1 982 g Clevios™ PH (solids 1.3 % by weight), 3 962 g ethanol was added under stirring. This dispersion was combined with a solution of 654 g Flemion^{®} F950 (6.0 % by weight in ethanol) and stirred for another 30 min.

A PTFE membrane (mean flow pore size 0,180 µm, thickness 16 µm, Gurley 20 s, area weight 19.3 g/m²) was coated with the dispersion. After drying, the lay down was measured with 0.6 g/m² in form of a blue monolithic layer on top of the membrane. Contact angle against water was 126.3 ° after 5 s and 125.8 ° after 30 s.

An additional Comparative Example 4 was made according US 4,532,316.

**Table 4: MVTR at low relative humidity**

| Example | MVTR 1 g/m²24h | MVTR 2 g/m²24h | MVTR 3 g/m²24h |
|---|---|---|---|
| Example 16, non air permeable | 86 150 | 18 900 | 17 800 |
| Example 5, air permeable | 84 200 | 18 000 | 17 800 |
| Comparative Example 4, non air permeable | 20 050 | 6 700 | 16 500 |

| | | | |
|---|---|---|---|
| MVTR 1: standard MVTR 2: mesh placed on water (measurement of coated sample at lower RH) MVTR 3: mesh placed on sample (measurement of coated sample at high RH, saturated). | | | |

MVTR measurement at low and high relative humidity indicate large breathability improvements for both coatings, air permeable and non air permeable.

### Example 17

1 200 g Clevios™ PH (solids 1.3 % by weight) was mixed with 654 g Flemion^{®} F950 (solids: 6%) and 8 600 g ethanol. An ePTFE membrane (thickness 34 µm, area weight 21.2 g/m², Gurley 11.5 s, water entry pressure 1.24 bar) was dip coated with this mixture at 25 °C and a speed of 2.6 m/min. The membrane was dried in a oven section at 130 °C and was tempered again at 165 °C.

The coated membrane showed a lay down of 0.6 g/m², a Gurley number of 14.4 s, a water entry pressure of 2.9 bar, CDT measurement < 0.01 s at 20 % RH. Contact angle against water for Example 17 was measured with 142.8 ° after 5 s and 142.6 ° after 30 s.

Example 17 indicates that the selection of membrane, intrinsically conductive polymer (Clevios™ PH vs. Clevios™ P) and coating process can produce antistatic, air permeable, watertight articles with outstanding water contact angles > 140°.

### Example 18

A mixture of 168 g Flemion^{®} F950 (solids 6.0 %), 30 g water, 2 g silver acetate (99.99%), 696 g ethanol and 198 g Clevios™ PH (same as used in Example 4) was prepared at 40 °C.

An ePTFE membrane (same as in Example 17) was dip coated and dried in a combined oven at 100 to 180 °C at a speed of 0.2 m/min.

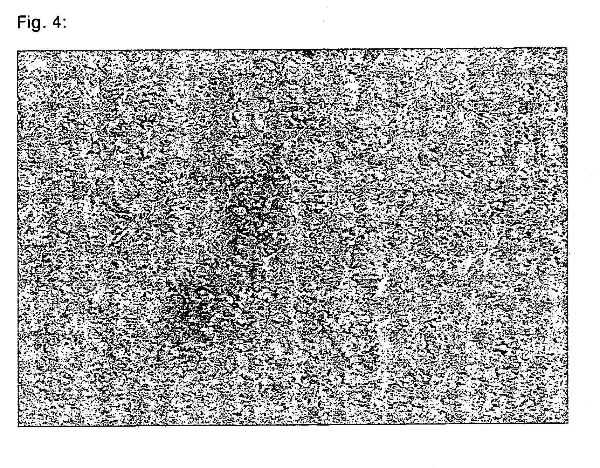

The coated membrane had a thickness of 19 micrometer, the lay down was 4 g/m² and the Gurley numbers are > 4 000 s. Figure 4 shows a SEM of the surface of the coated membrane indicating a closed monolithic surface.

### Example 19

1.1 g silver acetate (99.99%, Sigma Aldrich) was dissolved in 98.9 g water at 80 °C (solution A). 65 g Flemion^{®} F950 (3.15 % solids in ethanol) was mixed with 35 g solution A at 40 °C.

An ePTFE membrane (same as Example 3) was dip coated with the final solution. The solvent and water was removed by an air heated oven (oven 1: 100 °C, oven 2: 180 °C), running the web at 4 m/min through.

The final membrane was air permeable, the lay down was measured with 2.0 g/m² and the silver concentration at the surface with 1.3% by weight.

**Table 5: Zones of Inhibition after 24 h (Average size disc = 2.5 cm)**

| Sample Identity | Staphylococcus aureus | Pseudomonas aeruginosa |
|---|---|---|
| | Zones mm | Zones mm |
| Example 19 | 28mm | 26mm |
| ePTFE membrane | 0 | 0 |

Photographs of the Zones of Inhibition Bioassay plates with both Staphylococcus aureus and Pseudomonas aeruginosa were taken and showed clear zones of inhibition for Example 19 tested. The SEM pictures showed no bacterial biofilm on any area of the materials coated with ionic fluoropolymer - Ag.

Example 19 indicates a complex of nanoparticles of silver ions and ionic fluoropolymers on a substrate and illustrates antimicrobial properties.

## Claims

1. An article comprising a non-conductive substrate and a coating thereon comprising a complex of an ionic fluoropolymer and a counter-ionic agent which comprises surface charged nanoparticles.

2. Article according to claim 1, wherein the surface charged nanoparticles are nanoparticles of an intrinsically conductive polymer.

3. Article according claim 1 or 2 wherein from 0.1 to 99 percent of the ionic groups of the ionic fluoropolymer are balanced by counter-ionic charges of the counter-ionic agent.

4. Article according to any of the preceding claims, wherein the ionic fluoropolymer comprises anionic groups.

5. Article according to claim 4, wherein the anionic groups are selected from carboxylic, phosphoric, sulphonic groups and mixtures thereof.

6. Article according to any of the preceding claims, wherein the F/H ratio of the ionic fluoropolymer is equal to or greater than 1.

7. Article according to any of the preceding claims, whereby the coated article has a conductivity in the range of 10³ to 10¹¹ Ohm/square.

8. Article according to any of the preceding claims wherein the equivalent weight of the ionic fluoropolymer is in the range of 500 to 2,000 g/mol.

9. Article according to any of the preceding claims, wherein the substrate is a polymeric substrate.

10. Article according to claim 9, wherein the substrate is a fluoropolymer.

11. Article according to claim 10, wherein the substrate is polytetrafluoroethylene (PTFE).

12. Article according to any of the preceding claims, wherein the substrate is porous.

13. Article according to any of the preceding claims, wherein the coating is present as monolithic layer on a surface of the substrate.

14. Article according to claim 13, wherein the thickness of the coating present as monolithic layer on a surface of the substrate is in the range of 0.05 to 25 micrometer.

15. Article according to any of claims 12 to 14, wherein the coating is present on the inner and outer surface of the pores.

16. Article according to claim 15, wherein the thickness of the coating present on the inner and outer surface of the pores is above 50 nanometers.

17. Article according to claim 15 or 16, wherein the pores of the substrate are not entirely filled with the coating.

18. Article according to any of claims 12 to 17, wherein the coated substrate is air permeable (Gurley number < 100 s).

19. Article according to any of the preceding claims, wherein the coated substrate has a water contact angle of 90 ° or higher.

20. Article according to any of the preceding claims wherein the counter-ionic agent further comprises ions having antimicrobial activity.

21. A process for the production of a coating on a non-conductive substrate comprising the steps of:
a) preparing a mixture of an ionic fluoropolymer or a precursor thereof and surface charged nanoparticles or a precursor thereof,
b) applying the mixture prepared in step a) onto the substrate.

22. Use of a complex of an ionic fluoropolymer and a counter-ionic agent which comprises surface charged nanoparticles for the preparation of a coating on a non-conductive substrate.

23. Use of a coating comprising an ionic fluoropolymer and a counter-ionic agent which comprises surface charged nanoparticles for enhancing oleophobicity, breathability, antistatic properties, flame retardancy, antimicrobial properties and/or combinations thereof, of a non-conductive substrate.

24. Use of an article according to any of claims 1 to 20 for the manufacture of a garment, a textile structure, a laminate, a filter element, a venting element, a sensor, a diagnostic device, a protective enclosure, or a separation element.

## Patentansprüche

1. Gegenstand, der ein nichtleitendes Substrat und darauf eine Beschichtung aufweist, die einen Komplex aus einem ionischen Fluorpolymer und einem Gegenionenmittel umfaßt, das Nanopartikel mit geladener Oberfläche aufweist.

2. Gegenstand nach Anspruch 1, wobei die Nanopartikel mit geladener Oberfläche Nanopartikel eines eigenleitenden Polymers sind.

3. Gegenstand nach Anspruch 1 oder 2, wobei 0,1 bis 99 % der ionischen Gruppen des ionischen Fluorpolymers durch Gegenionenladungen des Gegenionenmittels ausgeglichen sind.

4. Gegenstand nach einem der vorstehenden Ansprüche, wobei das ionische Fluorpolymer anionische Gruppen aufweist.

5. Gegenstand nach Anspruch 4, wobei die anionischen Gruppen aus Carboxyl-, Phosphor-, Sulfongruppen und Gemischen davon ausgewählt sind.

6. Gegenstand nach einem der vorstehenden Ansprüche, wobei das F/H-Verhältnis des ionischen Fluorpolymers gleich oder größer als 1 ist.

7. Gegenstand nach einem der vorstehenden Ansprüche, wobei der beschichtete Gegenstand eine Leitfähigkeit im Bereich von 10³ bis 10¹¹ Ohm/square aufweist.

8. Gegenstand nach einem der vorstehenden Ansprüche, wobei das Äquivalentgewicht des ionischen Fluorpolymers im Bereich von 500 bis 2000 g/Mol liegt.

9. Gegenstand nach einem der vorstehenden Ansprüche, wobei das Substrat ein polymeres Substrat ist.

10. Gegenstand nach Anspruch 9, wobei das Substrat ein Fluorpolymer ist.

11. Gegenstand nach Anspruch 10, wobei das Substrat Polytetrafluorethylen (PTFE) ist.

12. Gegenstand nach einem der vorstehenden Ansprüche, wobei das Substrat porös ist.

13. Gegenstand nach einem der vorstehenden Ansprüche, wobei die Beschichtung als monolithische Schicht auf einer Oberfläche des Substrats vorliegt.

14. Gegenstand nach Anspruch 13, wobei die Dicke der als monolithische Schicht auf einer Oberfläche des Substrats vorliegenden Beschichtung im Bereich von 0,05 bis 25 µm liegt.

15. Gegenstand nach einem der Ansprüche 12 bis 14, wobei die Beschichtung auf der Innen- und der Außenseite der Poren vorliegt.

16. Gegenstand nach Anspruch 15, wobei die Dicke der auf der Innen- und der Außenseite der Poren vorliegenden Beschichtung mehr als 50 nm beträgt.

17. Gegenstand nach Anspruch 15 oder 16, wobei die Poren des Substrats nicht vollständig mit der Beschichtung gefüllt sind.

18. Gegenstand nach einem der Ansprüche 12 bis 17, wobei das beschichtete Substrat luftdurchlässig ist (Gurley-Zahl < 100 s).

19. Gegenstand nach einem der vorstehenden Ansprüche, wobei das beschichtete Substrat einen Kontaktwinkel bei Wasser von 90° oder mehr hat.

20. Gegenstand nach einem der vorstehenden Ansprüche, wobei das Gegenionenmittel ferner Ionen mit antimikrobieller Wirkung aufweist.

21. Verfahren zum Herstellen einer Beschichtung auf einem nichtleitenden Substrat, das die folgenden Schritte aufweist:
a) Herstellen eines Gemischs aus einem ionischen Fluorpolymer oder einer Vorläuferverbindung davon und Nanopartikeln mit geladener Oberfläche oder einer Vorläuferverbindung davon,
b) Aufbringen des im Schritt a) hergestellten Gemischs auf das Substrat.

22. Verwendung eines Komplexes von einem ionischen Fluorpolymer und einem Gegenionenmittel, das Nanopartikel mit geladener Oberfläche aufweist, für die Herstellung einer Beschichtung auf einem nichtleitenden Substrat.

23. Verwendung einer Beschichtung, die ein ionisches Fluorpolymer und ein Gegenionenmittel umfaßt, das Nanopartikel mit geladener Oberfläche aufweist, für die Verbesserung der Oleophobie, Atmungsfähigkeit, der antistatischen Eigenschaften, des Flammhemmvermögens, der antimikrobiellen Eigenschaften und/oder von Kombinationen davon bei einem nichtleitenden Substrat.

24. Verwendung eines Gegenstandes nach einem der Ansprüche 1 bis 20 für die Herstellung eines Kleidungsstücks, einer Textilstruktur, eines Laminats, eines Filterelementes, eines Entlüftungselementes, eines Sensors, eines Diagnosegerätes, einer schützenden Umhüllung oder eines Trennelementes.

## Revendications

1. Article comprenant un substrat non conducteur et un revêtement sur celui-ci comprenant un complexe d'un polymère fluoré ionique et d'un agent contre-ionique qui comprend des nanoparticules chargées en surface.

2. Article selon la revendication 1, dans lequel les nanoparticules chargées en surface sont des nanoparticules d'un polymère intrinsèquement conducteur.

3. Article selon la revendication 1 ou 2, dans lequel de 0,1 à 99 % des groupes ioniques du polymère fluoré ionique sont équilibrés par des charges contre-ioniques de l'agent contre-ionique.

4. Article selon l'une quelconque des revendications précédentes, dans lequel le polymère fluoré ionique comprend des groupes anioniques.

5. Article selon la revendication 4, dans lequel les groupes anioniques sont choisis parmi les groupes carboxylique, phosphorique et sulfonique et des mélanges de ceux-ci.

6. Article selon l'une quelconque des revendications précédentes, dans lequel le rapport F/H du polymère fluoré ionique est supérieur ou égal à 1.

7. Article selon l'une quelconque des revendications précédentes, dans lequel l'article revêtu a une conductivité comprise entre 10³ et 10¹¹ Ohm/carré.

8. Article selon l'une quelconque des revendications précédentes, dans lequel le poids équivalent du polymère fluoré ionique est compris entre 500 et 2000 g/mol.

9. Article selon l'une quelconque des revendications précédentes, dans lequel le substrat est un substrat polymère.

10. Article selon la revendication 9, dans lequel le substrat est un polymère fluoré.

11. Article selon la revendication 10, dans lequel le substrat est un polytétrafluoroéthylène (PTFE).

12. Article selon l'une quelconque des revendications précédentes, dans lequel le substrat est poreux.

13. Article selon l'une quelconque des revendications précédentes, dans lequel le revêtement est présent sous forme de couche monolithique sur une surface du substrat.

14. Article selon la revendication 13, dans lequel l'épaisseur du revêtement présent sous forme de couche monolithique sur une surface du substrat est comprise entre 0,05 et 25 µm.

15. Article selon l'une quelconque des revendications 12 à 14, dans lequel le revêtement est présent sur les surfaces interne et externe des pores.

16. Article selon la revendication 15, dans lequel l'épaisseur du revêtement présent sur les surfaces interne et externe des pores est supérieure à 50 nm.

17. Article selon la revendication 15 ou 16, dans lequel les pores du substrat ne sont pas entièrement remplis par le revêtement.

18. Article selon l'une quelconque des revendications 12 à 17, dans lequel le substrat revêtu est perméable à l'air (indice de Gurley < 100 s).

19. Article selon l'une quelconque des revendications précédentes, dans lequel le substrat revêtu a un angle de contact avec l'eau supérieur ou égal à 90°.

20. Article selon l'une quelconque des revendications précédentes, dans lequel l'agent contre-ionique comprend en outre des ions ayant une activité antimicrobienne.

21. Procédé de production d'un revêtement sur un substrat non conducteur comprenant les étapes consistant à :
a) préparer un mélange d'un polymère fluoré ionique ou d'un précurseur de celui-ci et de nanoparticules chargées en surface ou d'un précurseur de celles-ci,
b) appliquer le mélange préparé dans l'étape a) sur le substrat.

22. Utilisation d'un complexe d'un polymère fluoré ionique et d'un agent contre-ionique qui comprend des nanoparticules chargées en surface pour la préparation d'un revêtement sur un substrat non conducteur.

23. Utilisation d'un revêtement comprenant un polymère fluoré ionique et un agent contre-ionique qui comprend des nanoparticules chargées en surface pour améliorer l'oléophobicité, la respirabilité, les propriétés antistatiques, l'ignifugation, les propriétés antimicrobiennes et/ou des combinaisons de celles-ci, d'un substrat non conducteur.

24. Utilisation d'un article selon l'une quelconque des revendications 1 à 20, pour la fabrication d'un vêtement, d'une structure textile, d'un stratifié, d'un élément de filtration, d'un élément d'aération, d'un capteur, d'un dispositif de diagnostic, d'une enceinte de protection ou d'un élément de séparation.
